# FASCICULE DE BREVET EUROPEEN

(11) **EP 1 998 208 B1**
(45) Date de publication et mention de la délivrance du brevet: **27.02.2013**
(21) Numéro de dépôt: 08157187.9
(22) Date de dépôt: 29.05.2008
(51) Int. Cl.: G02B 23/12

(54) **Jumelle bioculaire de vision nocturne**
Biokulares Nachtsichtfernglas
Night vision binoculars

(30) Priorité: 29.05.2007 FR 0755304
(43) Date de publication de la demande: 03.12.2008
(73) Titulaire: Sagem Défense Sécurité, 75015 Paris (FR)
(72) Inventeur: Faure, Sylvain, 75015, PARIS (FR)
(74) Mandataire: Regimbeau

(56) Documents cités:
- EP-A- 0 677 762
- EP-A- 0 838 707
- FR-A- 2 721 719
- GB-A- 923 925

## Description

### DOMAINE TECHNIQUE GENERAL

La présente invention concerne une jumelle de vision nocturne, comportant un objectif d'entrée coudé, un tube intensificateur de lumière - l'objectif d'entrée étant conjugué au tube pour former une première image de scène à partir d'un flux lumineux provenant de la scène selon un axe de visée , et un séparateur optique, situé en sortie du tube et séparant la première image en sortie du tube en deux voies optiques, à savoir une première voie optique et une deuxième voie optique.

### ETAT DE L'ART

On connaît de nombreux systèmes de vision nocturne (c'est-à-dire une observation d'une scène dans des conditions d'éclairement très faible).

Certains d'entre eux sont conçus pour permettre une utilisation mains libres. Dans ce cas, le système de vision est soit fixé au visage de l'utilisateur à l'aide d'un masque de soutien, équipé de sangles par exemple, soit fixé à un support rendu solidaire d'un casque porté par l'utilisateur.

Les systèmes de vision, destinés par exemple au déplacement d'un fantassin, à la conduite de véhicule ou à la réalisation de travaux nocturnes, présentent en général un grossissement égal à l'unité, de façon à offrir des conditions de vision naturelles. L'invention est particulièrement, mais non exclusivement, destinée à ce type d'application.

Les systèmes de vision nocturne sont classiquement fondés sur la mise en oeuvre d'un tube intensificateur d'images, comportant une photocathode servant de surface d'entrée, un système de transfert et de multiplication d'électrons à microcanaux, et d'un écran à phosphore servant de surface de sortie. Un objectif à grande ouverture forme une image de la scène observée sur la surface d'entrée, puis l'image est intensifiée électroniquement, et enfin restituée sur l'écran de phosphore pour être observée au travers d'un ensemble oculaire. La vision bioculaire est obtenue en répartissant le flux sortant du tube sur deux voies oculaires à l'aide d'un séparateur optique.

La nécessité de fixer les équipements de conduite de nuit sur la tête entraîne la présence de contraintes ergonomiques importantes. En effet, la masse de l'équipement et sa forme protubérante, du fait de l'alignement des éléments - objectif, tube, oculaire - sur un axe de visée, entraînent un déplacement du centre de gravité de la tête et en modifient les caractéristiques d'inertie, ce qui engendre des problèmes de fatigue au niveau du cou. D'autre part, la présence de cette protubérance relativement longue (classiquement comprise entre 100 et 170 mm) et fragile, réduit la mobilité de l'utilisateur, notamment pour des déplacements dans des conditions difficiles ou pour la conduite de véhicule.

Pour résoudre ce problème, on connaît des systèmes optiques coudés, dans lequel l'objectif et l'intensificateur sont orientés selon un axe horizontal ou vertical ou d'un angle quelconque, perpendiculaire à l'axe de visée. De ce fait, la dimension de l'équipement selon l'axe de visée est réduite et le centre de gravité de l'ensemble est déplacé vers l'utilisateur. Cependant, cette conception nécessite d'une part la mise en oeuvre d'un nombre important de réflexions sur chacune des voies optiques, et d'autre part engendre à la fois une parallaxe entre l'axe de visée et l'axe oculaire et un encombrement gênant la mise en place du casque ou le passage du nez de l'utilisateur.

### PRESENTATION DE L'INVENTION

L'invention propose de pallier au moins un de ces inconvénients : notamment la parallaxe et l'encombrement.

A cet effet, on propose selon l'invention une jumelle de vision nocturne définie dans la revendication 1.

L'invention est avantageusement complétée par les caractéristiques suivantes, prises seules ou en une quelconque de leur combinaison techniquement possible :
- le tube intensificateur de lumière est un capteur vidéo équipé d'un écran de visualisation ;
- le plan de réflexion est une lame traitée miroir ou un prisme ;
- la première surface réfléchissante de coudage est un prisme ou un réflecteur plan ;
- la deuxième surface réfléchissante de coudage et la troisième surface réfléchissante de coudage sont chacune un réflecteur plan ;
- la deuxième surface réfléchissante de coudage et/ou la troisième surface réfléchissante de coudage et/ou un au moins parmi les deux premiers groupes et les deux deuxièmes groupes sont montées réglables selon au moins un axe pour permettre un réglage du parallélisme des deux voies oculaires entre elles ;
- le sous-module comprenant
   - le deuxième groupe convergent situé en sortie du plan de réflexion commun,
   - la troisième surface réfléchissante, et
   - un oculaire
   est monté réglable en translation sur la deuxième voie optique pour permettre un réglage de l'entraxe des deux voies oculaires entre elles ;
- le séparateur optique est une lame semi-réfléchissante ;
- le séparateur optique est un cube séparateur ;
- la jumelle comporte en outre un dispositif auxiliaire de visualisation associé à une voie auxiliaire située à une entrée du séparateur optique, l'entrée utilisée par la voie auxiliaire étant opposée à une entré utilisée par le tube, une image issue du dispositif auxiliaire étant apte à se superposer ou à se substituer à l'image provenant de la scène sur les voies oculaires ;
- la jumelle comporte un obturateur entre le tube et le séparateur optique et/ou un obturateur entre le tube et le dispositif auxiliaire, de sorte que les images provenant de la scène et/ou du dispositif auxiliaire peuvent être observées séparément dans le temps ou simultanément ;
- la troisième surface réfléchissante comporte un séparateur de faisceau comportant un cube séparateur ou une lame semi-réfléchissante et dans laquelle un deuxième dispositif auxiliaire de visualisation est associé en face d'entrée de ce séparateur de faisceau ;
- les pupilles des voies oculaires ont un diamètre supérieur à 5 mm, préférentiellement supérieur à 10 mm.

L'invention présente de nombreux avantages.

L'invention permet d'obtenir une jumelle de vision nocturne encore plus compacte, et mettant en oeuvre un nombre réduit d'éléments optiques.

La jumelle selon l'invention est coudée et a une dimension selon l'axe de visée réduite. Le centre de gravité de la jumelle est déplacé vers l'utilisateur.

L'encombrement notamment vertical de la jumelle par rapport à l'axe de visée est également réduit, ce qui favorise la mise en place du casque ou le passage du nez de l'utilisateur.

Le parallélisme des voies oculaires est réglable en usine et, dans une version particulière de l'invention, l'entraxe est facilement réglable, pour une adaptation de la jumelle à tous les utilisateurs.

Le champ observable par l'utilisateur est supérieur à 40°, préférentiellement égal ou supérieur à 50°.

L'encombrement total de la jumelle est préférentiellement inférieur à (en mm) 85x40x135, avec un diamètre du tube qui est préférentiellement égal ou inférieur à 37 mm. Le tube intensificateur est préférentiellement un tube sans inversion d'image, ce qui réduit son coût et son poids.

La parallaxe entre l'axe de visée de l'objectif et l'oculaire droit est nulle suivant l'axe vertical, et inférieure à 15 mm suivant l'axe horizontal. Ce faible mésalignement facilite la préhension d'objets en vision proche et, associé à la faible profondeur de la jumelle, permet de tirer à l'épaulée en utilisant la hausse ou le viseur clair d'un fusil.

La jumelle permet la mise en place d'un dispositif auxiliaire de visualisation, comme par exemple un dispositif vidéo, restituant par exemple les images vidéo prises par la lunette de visée d'une arme ou toute autre source d'information qui pourrait être utile pour l'utilisateur.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 représente schématiquement une vue planaire, en lentilles minces, d'un exemple de réalisation de la jumelle de vision nocturne selon l'invention ;
- la figure 2 représente schématiquement une vue en perspective d'un schéma selon la figure 1 ; et
- la figure 3 est une vue selon la figure 1, mais de la combinaison en lentilles épaisses.

Sur l'ensemble des figures, les éléments similaires portent des références numériques identiques.

### DESCRIPTION DETAILLEE

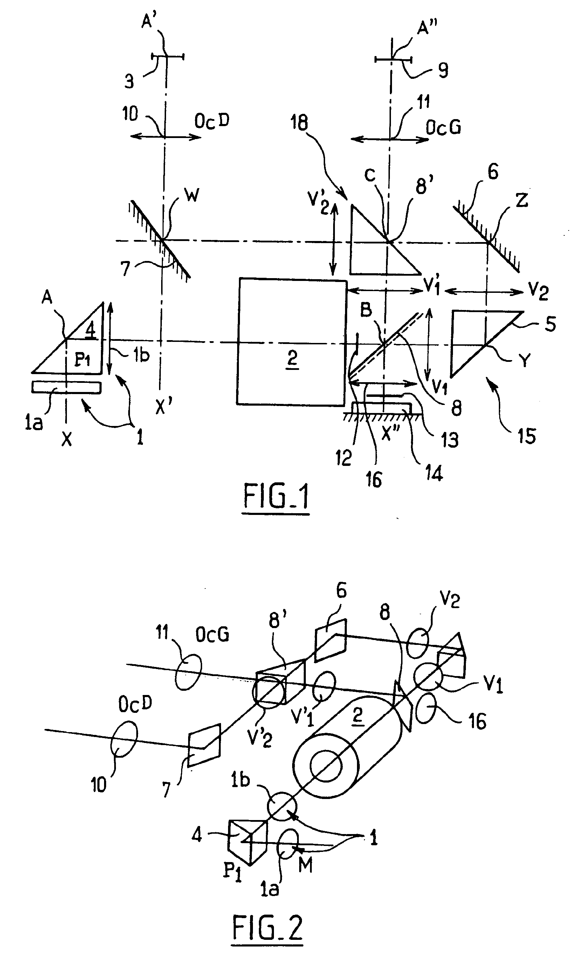

Un exemple de réalisation d'une jumelle, illustré par les figures 1, 2 et 3, montre l'agencement de base proposé par l'invention :
- une voie optique principale XAB, coudé en A, divisé en un axe de visée AX de la jumelle et un axe optique d'axe AB passant par un tube intensificateur de lumière 2,
- deux voies optiques BYZC et BCW, formant respectivement une première voie optique BYZC et une deuxième voie optique BCW,
- une première voie oculaire d'axe optique CA", et
- une deuxième voie oculaire d'axe optique WA'.

Un objectif d'entrée 1,4 est disposé sur l'axe de visée AX. Il comporte avantageusement, comme illustré, deux éléments 1a et 1 b.

Le premier élément 1a est situé sur l'axe de visée AX et forme le hublot de protection et éventuellement le groupe mobile de mise au point en focalisation.

Le second élément 1 b est situé sur l'axe AB d'un tube 2 intensificateur de lumière, et forme le groupe convergent sur le plan image dudit intensificateur. La lentille 1 b permet de former une image de la scène observée à travers le hublot 1a, pour que l'image soit envoyée vers le tube 2.

L'objectif 1,4 est coudé en A à l'aide d'un réflecteur plan 4 - préférentiellement matérialisé par un prisme - disposé entre les éléments optiques 1a et 1 b.

Dans la suite de la présente description, les réflecteurs plans sont réalisés à partir de toute technique connue de l'Homme de l'Art, par exemple à partir de lames planes ayant subi un traitement réfléchissant (métallique, diélectrique ou holographique), ou à partir de prismes en demi cube, utilisés en réflexion totale ou ayant subi un traitement réfléchissant du même type.

L'objectif d'entrée 1,4 est conjugué au tube 2 pour former une première image de scène à partir d'un flux lumineux provenant de la scène selon l'axe de visée AX. Ainsi, le flux lumineux sortant de l'objectif 1,4 est envoyé dans le tube intensificateur 2 pour être intensifié.

Pour obtenir une orientation correcte de l'image en sortie des oculaires et minimiser les coûts de fabrication et le poids de la jumelle, le tube 2 est préférentiellement un tube sans inversion d'image. Dans un mode particulier de l'invention, le tube intensificateur de lumière est un capteur vidéo équipé d'un écran de visualisation.

En sortie du tube 2, il est prévu un séparateur optique 8 séparant en B la première image en sortie du tube 2 en deux voies optiques, à savoir une première voie optique BYZC et une deuxième voie optique BCW. On comprend que le séparateur optique 8 est commun aux deux voies optiques BYZC et BCW.

La séparation de voies, réalisée par division du flux lumineux, peut être obtenue soit par séparation de pupilles, par exemple en utilisant un élément réfléchissant sur une demi-pupille de la voie optique principale, soit en mettant en oeuvre un traitement semi-réfléchissant ou séparateur de bandes spectrales, déposé sur une lame plane ou un cube séparateur. Préférentiellement, le séparateur optique 8 est une lame semi réfléchissante.

On va maintenant décrire la première voie optique BYZC.

En sortie du séparateur optique 8, la partie de la première image transmise à travers le séparateur optique 8 est dirigée vers une combinaison optique 15 de transport d'image. Classiquement, la combinaison optique 15 permet le transport d'image en formant, à partir de la première image précitée, une première image intermédiaire sur la première voie optique BYZC.

A cet effet, la combinaison optique 15 comporte deux premiers groupes, référencés par V1 et V2 respectivement, les deux premiers groupes V1 et V2 étant convergents et situés de part et d'autre d'une première surface réfléchissante 5 de coudage en Y.

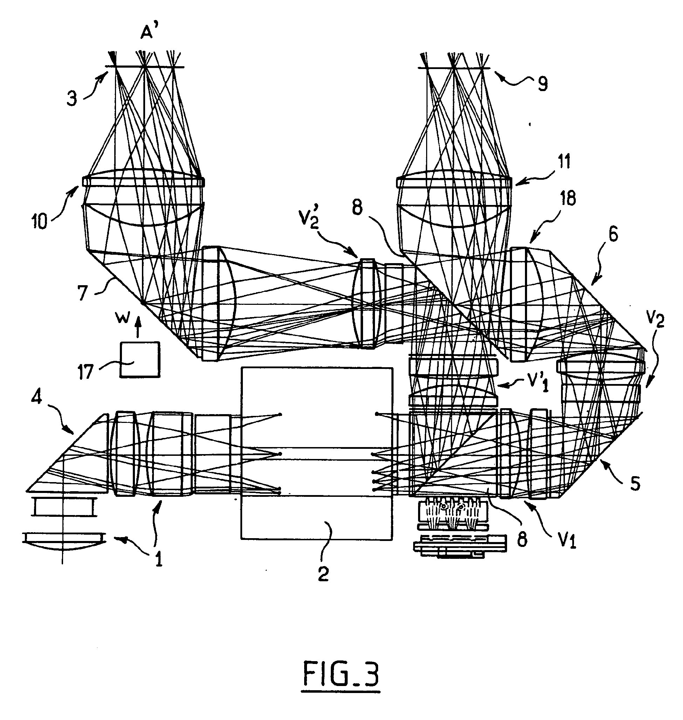

La première surface réfléchissante 5 peut être matérialisée par un prisme (comme indiqué sur la figure 1). La première surface réfléchissante 5 utilisée est dans ce cas la face interne générée par l'hypoténuse de la base du prisme. La première surface réfléchissante 5 peut également être un miroir (comme indiqué sur la figure 3).

En sortie de la combinaison optique 15, la première image intermédiaire est envoyée vers une deuxième surface réfléchissante 6 de coudage en Z.

La deuxième surface réfléchissante 6 envoie la première image intermédiaire vers un plan de réflexion 8' en C.

Le plan de réflexion 8' envoie la première image intermédiaire vers une première voie oculaire d'axe CA', l'axe CA' étant parallèle à l'axe de visée AX.

Comme le montre la figure 1, le plan de réflexion 8' peut être un prisme, la face utilisée pour la réflexion de la première image intermédiaire étant la face externe générée par l'hypoténuse de la base du prisme. La figure 3 montre que le plan de réflexion peut également être un miroir (comme par exemple une lame traitée miroir). Le plan de réflexion 8' est réfléchissant des deux côtés. Dans ce cas une lentille 18 permet d'avoir une courbure de faisceaux identique à celle obtenue avec un prisme.

On constate que la première voie optique BYZC comporte ainsi trois coudages, de sorte que l'axe BY est parallèle à l'axe CZ, les axes CZ et BY étant perpendiculaires à l'axe YZ.

On va maintenant décrire la deuxième voie optique BCW.

La partie de la première image réfléchie en B par le séparateur optique 8 est directement envoyée vers le plan de réflexion 8' en C.

De même que précédemment, la deuxième voie optique BCW comporte une combinaison optique 18 permettant le transport d'image. De même que précédemment également, la combinaison optique 18 permet le transport d'image grâce à la formation, à partir de la première image, d'une deuxième image intermédiaire sur la deuxième voie optique BCW.

A cet effet, la combinaison optique 18 comporte des deuxièmes groupes, référencés par V1' et V2', convergents et situés de part et d'autre du plan de réflexion 8'.

On comprend que le plan de réflexion 8' est commun à la première voie optique BYZC et à la deuxième voie optique BCW. La deuxième voie optique BCW utilise la face réfléchissante du plan de réflexion opposée à la face réfléchissante utilisée dans la première voie optique BYZC.

Le plan de réflexion 8' forme un coudage en C sur la deuxième voie optique BCW, de sorte que l'axe CW est perpendiculaire à l'axe BC.

La deuxième voie optique BCW comporte une troisième surface réfléchissante 7 de coudage en W.

La troisième surface réfléchissante 7 envoie la deuxième image intermédiaire vers une deuxième voie oculaire d'axe WA', WA' étant parallèle à l'axe de visée AX.

La voie oculaire d'axe WA' correspondant à l'oeil droit d'un utilisateur comporte un oculaire 10, comportant préférentiellement une lentille convergente, pour la formation d'une pupille 3. De même, la voie oculaire d'axe CA" correspondant à l'oeil gauche de l'utilisateur comporte un oculaire 11, comportant préférentiellement une lentille convergente, pour la formation d'une pupille 9.

Les pupilles 3 et 9 des voies oculaires ont un diamètre supérieur à 5 mm, et préférentiellement supérieur à 10 mm.

Les voies BCW et BYZC ont préférentiellement une longueur de trajet optique équivalente, pour intégrer les mêmes groupes optiques dans un souci d'optimisation et de diminution des coûts. Ainsi, dans un mode privilégié de l'invention, les groupes V1 et V1' sont identiques, ainsi que les groupes V2 et V2', et les oculaires 10 et 11.

D'une part les plans de réflexion du prisme 4 de l'objectif, du premier séparateur oblique 8 et de la première surface réfléchissante 5 sont parallèles entre eux, de même que d'autre part les plans de réflexion de la deuxième surface réfléchissante 6, du plan de réflexion 8' et de la troisième surface réfléchissante 7 sont parallèles entre eux. Comme le montre la figure 1, les plans de réflexion respectifs du prisme 4, du séparateur optique 8 et de la première surface réfléchissante 5 sont perpendiculaires aux plans de réflexion respectifs de la deuxième surface réfléchissante 6, du plan de réflexion 8' et de la troisième surface réfléchissante 7.

Du fait du parallélisme entre les plans de réflexion de la deuxième surface réfléchissante 6 et de la troisième surface réfléchissante 7, il y a invariance du parallélisme entre les axes WA' et YZ. De même, il y a invariance du parallélisme entre les axes CA" et YZ, du fait du parallélisme entre les plans de réflexion de la deuxième surface réfléchissante 6 et du plan de réflexion 8'.

De façon préférentielle et pour garantir le parallélisme des axes CA" et WA', la deuxième surface réfléchissante 6 et/ou la troisième surface réfléchissante 7 de coudage et/ou un au moins parmi les deux premiers groupes V1 et V2 et les deux deuxièmes groupes V'1 et V'2 sont montés réglables selon au moins un axe. Un tel montage permet un réglage du parallélisme des deux voies oculaires.

Le réglage du parallélisme des axes CA" et WA' des deux voies oculaires est effectué lors de la construction et du montage de la jumelle en escamotant le premier groupe V1, situé en entrée de la première surface réfléchissante 5, en escamotant le deuxième groupe V1', situé en entrée du plan de réflexion 8' et en escamotant la voie AB. On peut alors observer à travers les voies CWA' et YZCA" idéalement afocales une mire située à l'infini et modifier la position de la deuxième surface réfléchissante 6 et/ou de la troisième surface réfléchissante 7 et/ou de V2 et/ou de V'2 jusqu'à ce que les deux axes WA' et CA" soient parallèles.

Le réglage du parallélisme des axes CA" et WA' des deux voies oculaires peut également être effectué en ne modifiant que la position radiale de l'une au moins des optiques V1, V2, V'1, V'2, 10 ou 11. Préférentiellement, le sous-groupe comportant :
- le deuxième groupe V2' convergent situé en sortie du plan de réflexion 8' commun,
- la troisième surface réfléchissante 7, et
- l'oculaire 10
est monté réglable en translation sur l'axe CW de la deuxième voie optique BCW pour permettre un réglage de l'entraxe des deux voies oculaires entre elles.

Comme on le constate sur la figure 1, la jumelle comporte en outre très préférentiellement un dispositif auxiliaire 14 de visualisation associé à une voie auxiliaire d'axe BX". Le dispositif auxiliaire 14 est par exemple un écran vidéo restituant les images envoyées par la lunette de visée d'une arme ou par toute autre source d'information qui pourrait être utile pour l'utilisateur.

La voie auxiliaire d'axe BX" est située à une entrée B du séparateur optique 8, l'entrée utilisée par la voie auxiliaire étant opposée à une entrée utilisée par le tube 2.

Un objectif 16, par exemple une lentille convergente, est monté entre le dispositif 14 et le séparateur 8.

Ainsi, une image issue du dispositif auxiliaire 14 est apte à se superposer, sur les voies oculaires, à l'image provenant de la scène.

Les deux images peuvent être superposées simultanément ou être consultées par l'utilisateur indépendamment l'une de l'autre.

Cette fonction peut-être obtenue de manière électronique en allumant simultanément le tube intensificateur et l'écran vidéo, ou en éteignant respectivement l'un ou l'autre suivant le mode de visualisation souhaité par l'utilisateur.

Cette fonction peut également être obtenue de manière mécanique. A cet effet, la jumelle comporte un obturateur 12 situé entre le tube 2 et le séparateur optique 8 et/ou un obturateur 13 entre le tube 2 et le dispositif 14 auxiliaire, les obturateurs étant actionnés indépendamment l'un de l'autre par l'utilisateur en fonction de ses désirs. Lorsque l'obturateur 12 est en position fermée et que l'obturateur 13 est en position ouverte, seule l'image issue du dispositif auxiliaire 14 peut être visible par l'utilisateur. Lorsque l'obturateur 12 est en position ouverte mais que l'obturateur 13 est en position fermée, alors seule l'image issue de la scène est visible par l'utilisateur. Lorsque les deux obturateurs sont en position ouverte, les deux images sont superposées.

Comme le montre la figure 3, la troisième surface réfléchissante 7 peut comporter un séparateur de faisceau comportant lui-même un cube séparateur ou une lame semi-réfléchissante. Dans ce cas, un deuxième dispositif auxiliaire 17 de visualisation est associé en face d'entrée de ce séparateur de faisceau et permet une visualisation supplémentaire, comme un insert par exemple, mais uniquement sur la voie oculaire droite WA'.

L'invention n'est pas limitée aux exemples décrits et illustrés: il est possible d'inverser les voies droite et gauche par rapport aux solutions précédemment décrites.

## Revendications

1. Jumelle de vision nocturne, comportant :
- un objectif d'entrée coudé (1,4) ;
- un tube intensificateur de lumière (2) situé en aval de l'objectif (1,4) par rapport à une scène,
l'objectif d'entrée (1,4) étant conjugué au tube (2) pour former une première image de scène à partir d'un flux lumineux provenant de la scène selon un axe de visée (AX), l'axe de visée (AX) étant coudé à partir de la scène vers le tube (2),
- un séparateur optique (8), situé en sortie du tube (2) et séparant la première image en sortie du tube (2) en deux voies optiques (BYZC, BCW), à savoir une première voie optique (BYZC) en transmission par rapport au séparateur (8) et une deuxième voie optique (BCW), en réflexion par rapport au séparateur (8),
la jumelle étant **caractérisée en ce qu'**elle comporte ;
- un plan de réflexion (8') commun à la première voie optique (BYZC) et à la deuxième voie optique (BCW) ;
- une première combinaison optique comportant deux premiers groupes (V1, V2) convergents situés de part et d'autre d'une première surface réfléchissante (5) de coudage, pour former, à partir de la première image, une première image intermédiaire sur la première voie optique (BYZC),
- une deuxième surface réfléchissante (6) de coudage envoyant la première image intermédiaire vers le plan de réflexion commun (8'), de sorte que la première image intermédiaire est envoyée vers une première voie oculaire, d'axe (CA") parallèle à l'axe de visée (AX), par ledit plan de réflexion commun (8') ;
- une deuxième combinaison optique comportant deux deuxièmes groupes (V1', V2') convergents situés de part et d'autre du plan de réflexion (8') commun, pour former, à partir de la première image, une deuxième image intermédiaire sur la deuxième voie optique (BCW), le plan de réflexion commun (8') formant alors un coudage sur la deuxième voie optique (BCW) ; et
- une troisième surface réfléchissante (7) de coudage envoyant la deuxième image intermédiaire vers une deuxième voie oculaire d'axe (WA') parallèle à l'axe de visée (AX).

2. Jumelle selon la revendication 1, dans laquelle le tube intensificateur de lumière est un capteur vidéo équipé d'un écran de visualisation.

3. Jumelle selon la revendication 1 ou 2, dans laquelle le plan de réflexion (8') est une lame traitée miroir ou un prisme.

4. Jumelle selon l'une des revendications 1 à 3, dans laquelle la première surface réfléchissante (5) de coudage est un prisme ou un réflecteur plan.

5. Jumelle selon l'une des revendications 1 à 4, dans laquelle la deuxième surface réfléchissante (6) de coudage et la troisième surface réfléchissante (7) de coudage sont chacune un réflecteur plan.

6. Jumelle selon l'une des revendications 1 à 5, dans laquelle la deuxième surface réfléchissante (6) de coudage et/ou la troisième surface réfléchissante (7) de coudage et/ou un au moins parmi les deux premiers groupes (V1, V2) et les deux deuxièmes groupes (V'1, V'2) sont montées réglables selon au moins un axe pour permettre un réglage du parallélisme des deux voies oculaires (CA", WA') entre elles.

7. Jumelle selon l'une des revendications 1 à 6, dans laquelle le sous-module comprenant
- le deuxième groupe (V2') convergent situé en sortie du plan de réflexion (8') commun,
- la troisième surface réfléchissante (7), et
- un oculaire (10)
est monté réglable en translation (CW) sur la deuxième voie optique (BCW) pour permettre un réglage de l'entraxe des deux voies oculaires (CA", WA') entre elles.

8. Jumelle selon l'une des revendications 1 à 7, dans laquelle le séparateur optique (8) est une lame semi-réfléchissante.

9. Jumelle selon l'une des revendications 1 à 7, dans laquelle le séparateur optique (8) est un cube séparateur.

10. Jumelle selon l'une des revendications 1 à 9, comportant en outre un dispositif auxiliaire (14) de visualisation associé à une voie auxiliaire (BX") située à une entrée du séparateur optique (8), l'entrée utilisée par la voie auxiliaire étant opposée à une entré utilisée par le tube (2), une image issue du dispositif auxiliaire étant apte à se superposer ou à se substituer à l'image provenant de la scène sur les voies oculaires (CA", WA').

11. Jumelle selon la revendication 10, comportant un obturateur (12) entre le tube (2) et le séparateur optique (8) et/ou un obturateur (13) entre le tube (2) et le dispositif (14) auxiliaire, de sorte que les images provenant de la scène et/ou du dispositif auxiliaire peuvent être observées séparément dans le temps ou simultanément.

12. Jumelle selon l'une des revendications 1 à 11, dans laquelle la troisième surface réfléchissante (7) comporte un séparateur de faisceau comportant un cube séparateur ou une lame semi-réfléchissante et dans laquelle un deuxième dispositif auxiliaire (17) de visualisation est associé en face d'entrée de ce séparateur de faisceau.

13. Jumelle selon l'une des revendications 1 à 12, dans laquelle les pupilles (3, 9) des voies oculaires (CA", WA') ont un diamètre supérieur à 5 mm, préférentiellement supérieur à 10 mm.

## Claims

1. Night vision binoculars, comprising:
- an angled input lens (1, 4);
- a light intensifier tube (2) situated downstream from the lens (1, 4) with respect to a scene,
the input lens (1, 4) being combined with the tube (2) to form a first scene image from a light flow from the scene in a viewing axis (AX), the viewing axis (AX) being angled from the scene towards the tube (2),
- an optical separator (8), positioned at the output of the tube (2) and separating the first image at the output of the tube (2) into two optical channels (BYZC, BCW), which is to say a first optical channel (BYZC) in transmission with respect to the separator (8) and a second optical channel (BCW) in reflection with respect to the separator (8),
the binoculars being **characterised in that** they comprise:
- a plane of reflection (8') common to the first optical channel (BYZC) and the second optical channel (BCW);
- a first optical combination comprising two first convergent groups (V1, V2) positioned on either side of a first reflective angled surface (5), to form, from the first image, a first intermediate image on the first optical channel (BYZC),
- a second reflective angled surface (6) transferring the first intermediate image to the common plane of reflection (8'), so that the first intermediate image is sent to a first eyepiece channel, with an axis (CA") parallel to the viewing axis (AX), via said common plane of reflection (8');
- a second optical combination comprising two second convergent groups (V1', V2') positioned on either side of the common plane of reflection (8'), to form, from the first image, a second intermediate image on the second optical channel (BCW), the common plane of reflection (8') then forming an angle on the second optical channel (BCW); and
- a third reflective angled surface (7) transferring the second intermediate image to a second eyepiece channel with an axis (WA') parallel to the viewing axis (AX).

2. Binoculars according to claim 1, in which the light intensifier tube is a video sensor equipped with a viewing screen.

3. Binoculars according to claim 1 or 2, in which the plane of reflection (8') is a mirror-coated blade or a prism.

4. Binoculars according to one of claims 1 to 3, in which the first reflective angled surface (5) is a prism or a flat reflector.

5. Binoculars according to one of claims 1 to 4, in which the second reflective angled surface (6) and the third reflective angled surface (7) are both flat reflectors.

6. Binoculars according to one of claims 1 to 5, in which the second reflective angled surface (6) and/or the third reflective angled surface (7) and/or at least one of the two first groups (V1, V2) and the two second groups (V'1, V'2) are mounted so as to be adjustable in at least one axis to permit adjustment of the parallelism of the two eyepiece channels (CA" , WA') with respect to each other.

7. Binoculars according to one of claims 1 to 6, in which a sub-module comprising:
- the second convergent group (V2') positioned at the output of the common plane of reflection (8'),
- the third reflective surface (7), and
- an eyepiece (10)
is mounted so as to be adjustable in translation (CW) on the second optical channel (BCW) to permit adjustment of the distance between axes of the two eyepiece channels (CA" , WA') with respect to each other.

8. Binoculars according to one of claims 1 to 7, in which the optical separator (8) is a semi-reflective blade.

9. Binoculars according to one of claims 1 to 7, in which the optical separator (8) is a separator cube.

10. Binoculars according to one of claims 1 to 9, further comprising an auxiliary viewing device (14) associated with an auxiliary channel (BX") positioned at an input of the optical separator (8), the input used by the auxiliary channel being opposite an input used by the tube (2), an image issuing from the auxiliary device being able to be superimposed on or be substituted for the image coming from the scene on the eyepiece channels (CA" , WA') .

11. Binoculars according to claim 10, comprising a shutter (12) between the tube (2) and the optical separator (8) and/or a shutter (13) between the tube (2) and the auxiliary device (14), so that the images coming from the scene and/or the auxiliary device may be observed separately in time or simultaneously.

12. Binoculars according to one of claims 1 to 11, in which the third reflective surface (7) comprises a beam splitter comprising a separator cube or a semi-reflective blade and in which a second auxiliary viewing device (17) is associated opposite the input of this beam splitter.

13. Binoculars according to one of claims 1 to 12, in which the pupils (3, 9) of the eyepiece channels (CA" , WA') have a diameter greater than 5 mm, preferably greater than 10 mm.

## Patentansprüche

1. Nachtsichtgerät, Folgendes umfassend:
- ein abgewinkeltes Eingangsobjektiv (1, 4);
- eine Lichtverstärkerröhre (2), die relativ zu einer Szene hinter dem Objektiv (1, 4) angeordnet ist,
wobei das Eingangsobjektiv (1, 4) konjugiert zur Röhre (2) ist, um ein erstes Bild der Szene zu bilden, und dies ausgehend von einem Lichtfluss, der entlang einer Visierachse (AX) von der Szene kommt, wobei die Visierachse (AX) ausgehend von der Szene in Richtung der Röhre (2) abgewinkelt ist,
- einen optischen Strahlteiler (8), der sich am Ausgang der Röhre (2) befindet und der das erste Bild am Ausgang der Röhre (2) auf zwei optische Wege (BYZC, BCW) aufteilt, und zwar einen ersten optischen Weg (BYZC) in Durchlassung in Bezug auf den Strahlteiler (8) und einen zweiten optischen Weg (BCW) in Reflexion in Bezug auf den Strahlteiler (8),
wobei das Sichtgerät **dadurch gekennzeichnet ist, dass** es Folgendes umfasst:
- eine Reflexionsebene (8'), die für den ersten optischen Weg (BYZC) und den zweiten optischen Weg (BCW) gemeinsam ist;
- ein erstes optisches System, das zwei erste konvergente Gruppen (V1, V2) umfasst, die sich vor und hinter einer ersten reflektierenden Oberfläche (5) zum Abwinkeln befinden, um, ausgehend vom ersten Bild, auf dem ersten optischen Weg (BYZC) ein erstes Zwischenbild zu bilden,
- eine zweite reflektierende Oberfläche (6) zum Abwinkeln, die das erste Zwischenbild in Richtung der gemeinsamen Reflexionsebene (8') weiterleitet, derart, dass das erste Zwischenbild von der gemeinsamen Reflexionsebene (8') in Richtung eines ersten Okularwegs weitergeleitet wird, dessen Achse (CA") parallel zur Visierachse (AX) ist;
- eine zweites optisches System, das zwei zweite konvergente Gruppen (V'1, V`2) umfasst, die sich vor und hinter der gemeinsamen Reflexionsebene (8') befinden, um, ausgehend vom ersten Bild, auf dem zweiten optischen Weg (BCW) ein zweites Zwischenbild zu bilden, wobei die gemeinsame Reflexionsebene (8') im zweiten optischen Weg (BCW) eine Abwinkelung bildet; und
- eine dritte reflektierende Oberfläche (7) zum Abwinkeln, die das zweite Zwischenbild in Richtung eines zweiten Okularwegs weiterleitet, dessen Achse (WA') parallel zur Visierachse (AX) ist.

2. Sichtgerät nach Anspruch 1, bei dem die Lichtverstärkerröhre ein Videosensor ist, der mit einem Visualisierungsbildschirm ausgestattet ist.

3. Sichtgerät nach Anspruch 1 oder 2, bei dem die Reflexionsebene (8') ein als Spiegel behandeltes Plättchen oder ein Prisma ist.

4. Sichtgerät nach einem der Ansprüche 1 bis 3, bei dem die erste reflektierende Oberfläche (5) zum Abwinkeln ein Prisma oder ein ebener Reflektor ist.

5. Sichtgerät nach einem der Ansprüche 1 bis 4, bei dem die zweite reflektierende Oberfläche (6) zum Abwinkeln und die dritte reflektierende Oberfläche (7) zum Abwinkeln jeweils ein ebener Reflektor ist.

6. Sichtgerät nach einem der Ansprüche 1 bis 5, bei dem die zweite reflektierende Oberfläche (6) zum Abwinkeln und/oder die dritte reflektierende Oberfläche (7) zum Abwinkeln und/oder wenigstens eine von den zwei ersten Gruppen (V1, V2) und den zwei zweiten Gruppen (V'1, V'2) bezüglich wenigstens einer Achse einstellbar montiert sind, um eine Einstellung der Parallelität der zwei Okularwege (CA", WA') zueinander zu gestatten.

7. Sichtgerät nach einem der Ansprüche 1 bis 6, bei dem das Untermodul, das Folgendes umfasst:
- die zweite konvergente Gruppe (V'2), die sich am Ausgang der gemeinsamen Reflexionsebene (8') befindet,
- die dritte reflektierende Oberfläche (7), und
- ein Okular (10),
bezüglich einer Verschiebung (CW) im zweiten optischen Weg (BCW) einstellbar montiert ist, um eine Einstellung des Achsenabstands der zwei Okularwege (CA", WA') zueinander zu gestatten.

8. Sichtgerät nach einem der Ansprüche 1 bis 7, bei dem der optische Strahlteiler (8) ein halbreflektierendes Plättchen ist.

9. Sichtgerät nach einem der Ansprüche 1 bis 7, bei dem der optische Strahlteiler (8) ein Strahlteilerwürfel ist.

10. Sichtgerät nach einem der Ansprüche 1 bis 9, das außerdem eine Zusatzvorrichtung (14) zur Visualisierung umfasst, die zu einem Zusatzweg (BX") gehört, der sich an einem Eingang des optischen Strahlteilers (8) befindet, wobei der vom Zusatzweg verwendete Eingang entgegengesetzt zu einem Eingang ist, der von der Röhre (2) verwendet wird, und wobei ein aus der Zusatzvorrichtung kommendes Bild dafür eingerichtet ist, auf den Okularwegen (CA", WA') sich dem von der Szene kommenden Bild zu überlagern oder dieses zu ersetzen.

11. Sichtgerät nach Anspruch 10, das einen Verschluss (12) zwischen der Röhre (2) und dem optischen Strahlteiler (8) und/oder einen Verschluss (13) zwischen der Röhre (2) und der Zusatzvorrichtung (14) umfasst, derart, dass die Bilder, die von der Szene und/oder von der Zusatzvorrichtung kommen, gleichzeitig oder zeitlich getrennt betrachtet werden können.

12. Sichtgerät nach einem der Ansprüche 1 bis 11, bei dem die dritte reflektierende Oberfläche (7) einen Strahlteiler umfasst, der einen Strahlteilerwürfel oder ein halb-reflektierendes Plättchen umfasst, und bei dem eine zweite Zusatzvorrichtung (17) zur Visualisierung gegenüber dem Eingang des Strahlteilers zugeordnet ist.

13. Sichtgerät nach einem der Ansprüche 1 bis 12, bei dem die Pupillen (3, 9) der Okularwege (CA", WA') einen Durchmesser von mehr als 5 mm und vorzugsweise von mehr als 10 mm haben.
